**Europäisches Patentamt**

**European Patent Office**

**Office européen des brevets**

(11) Publication number: **0 175 938**
**B1**

## (12) EUROPEAN PATENT SPECIFICATION

(45) Date of publication of patent specification: **02.01.91**

(21) Application number: **85110620.3**

(22) Date of filing: **23.08.85**

(51) Int. Cl.⁵: **C 08 G 8/00,** C 08 G 8/10,
C 08 J 9/04

(54) Method for producing foamed phenol-formaldehyde resins.

(30) Priority: **28.08.84 IT 2243184**

(43) Date of publication of application:
**02.04.86 Bulletin 86/14**

(45) Publication of the grant of the patent:
**02.01.91 Bulletin 91/01**

(84) Designated Contracting States:
**DE FR GB**

References cited:
**EP-A-0 105 009**
**DE-A-2 625 811**
**FR-A-1 584 467**
**GB-A- 335 194**
**US-A-4 221 873**

(73) Proprietor: **STEP CHIMICA S.r.l.**
**Via Correggio 4**
**I-20063 Cernusco sul Naviglio (Milano) (IT)**

(72) Inventor: **Conti, Giannina**
**Via M. Bianco 8**
**I-20090 Segrate (Milano) (IT)**

(74) Representative: **Modiano, Guido et al**
**MODIANO, JOSIF, PISANTY & STAUB Modiano**
**& Associati Via Meravigli, 16**
**I-20123 Milano (IT)**

Courier Press, Leamington Spa, England.

## Description

The invention relates to the preparation of phenol- and formaldehyde-based foamed bodies for use in thermal and acoustic insulation applications.

The preparation of phenol foams is well known: it consists of mixing a phenolic resin, of the resol type, with a foaming agent and an acidic catalyst in the presence, or absence of such other additives as surfactants, comonomers, fire retarders, fillers, etc.

Resol-type phenolic resin is obtained conventionally by condensing phenol and an aqueous solution of formaldehyde in the presence of a basic catalyst.

Thus, foamed phenolic bodies are currently obtained with a two-stage process which is expensive and difficult to carry out. In fact, the resol-type resin is not stable over time and has a maximum life span of up to two or three months, with characteristics which change over time; further, the foaming reaction is very rapid, difficult to control, and greatly affected by the resin ageing.

Quite apparent are, therefore, the technical and economical advantages of preparing phenolic foams in a single stage, directly from phenol and formaldehyde rather than from the expensive and unstable phenolic resins.

This approach has been successfully attempted by starting from phenolic derivatives having at least two hydroxyl groups, such as pyrocatechin, hydroquinone, etc., as disclosed in the U.S.S.R. Patent Application 7807775 filed by Nauchno-Issledovatelski Institut.

The method described in that patent application is not applicable to phenol, because no foamed bodies can be obtained using phenol.

This Applicant has unexpectedly found that the aforesaid problems can be obviated by a method for producing phenol-formaldehyde-based rigid foamed bodies, characterised in that the condensation of phenol-formaldehyde and expansion of the resulting resin are conducted in a single stage wherein the phenol is contacted with the formaldehyde in an aqueous solution and with the addition of at least one acidic catalyst, at least one foaming agent, and an inert powder having for at least 70% by weight a particle size of less than 500 μm (microns). Preferably the inert powder has for at least 70% by weight a particle size of less than 125 μm (microns).

The acidic catalysts utilised are preferably, sulphuric acid, phosphoric acid, paratoluenesulphonic acid, phenolsulphuric acid, etc.

The foaming agents utilised are preferably, calcium carbonate, Freon, isopropyl ether, low-boiling hydrocarbons, etc.

The inert powders utilised are preferably, inorganics: kaolin, calcium, sulphate, siliceous clay, etc. organics: polyvinyl chloride.

Inert powder is used in amounts varying from 2% to 400% by weight referred to the weight of phenol.

The term inert powders refers herein to powders which do not chemically react with the other compounds utilised, and in particular, not with the acidic catalyst.

The phenol is introduced in an aqueous solution of formaldehyde (at 30—45%), and agitated until a homogeneous solution is obtained.

The foaming agent is then added (unless this develops in the course of the reaction) and the inert powder charge and other customary additives are introduced. The suspension is energetically agitated and heated to a temperature above 35°C. The body becomes heated and expands regularly to form a rigid foam which is especially suitable for manufacturing thermal and acoustic insulating boards.

### Example 1

100 parts by weight of phenol are admixed at 25°C to 100 parts by weight of a 34% solution of formaldehyde by weight in water.

0.5 parts by weight of calcium carbonate are added as the expanding medium to 2 parts by weight of kaolin, as the inert powder filler, along with 20 parts by weight of paratoluenesulphonic acid.

Heat is applied to above 35°C, and a rigid foamed body suitable for insulative applications is yielded.

### Example 2

100 parts by weight of phenol are admixed at 25°C to 100 parts by weight of a 34% (by weight) solution of formaldehyde in water.

2 parts by weight of sodium carbonate, 200 parts by weight of calcium sulphate, as the inert filler, and 50 parts by weight of paratoluenesulphonic acid are added. Heat is applied to a temperature above 35°C, and a rigid, regularly expanded body is yielded which is suitable for insulative applications.

### Example 3

100 parts by weight of phenol are admixed at 25°C to 100 parts by weight of a 34% (by weight) solution of formaldehyde in water.

2 parts by weight of calcium carbonate, 400 parts by weight talc, as the inert filler, and 70 parts by weight of density 1.12 sulphuric acid are then added. Heat is applied to a temperature above 35°C and a rigid foamed body suitable for insulative applications is yielded.

### Example 4

100 parts by weight of phenol are admixed at 25°C to 100 parts by weight of 34% (by weight) formaldehyde in water. 2 parts by weight of calcium carbonate as the foaming agent, 100 parts by weight of powdery polyvinyl chloride as the inert filler, and 30 parts by weight of paratoluenesulphonic acid are then added. Heat is applied to a temperature above 35°C and a rigid foamed body is yielded which is suitable for insulative applications.

## Claims

1. A method for producing rigid phenol- and formaldehyde-based foamed bodies, characterised in that the condensation of phenol-formaldehyde and the expansion of the resulting resin are conducted in a single stage by mixing the phenol with the formaldehyde in an aqueous solution and adding to said mixture at least one acidic catalyst, at least one foaming agent, and an inert powder having for at least 70% by weight, a particle size of less than 500 µm (microns).

2. A method according to Claim 1, characterised in that said inert powder has a particle size of less than 125 µm (microns) for at least 70% by weight.

3. A method according to Claim 2, characterised in that said inert powder is utilised in amounts varying from 2% to 400% by weight of phenol.

## Patentansprüche

1. Verfahren zur Herstellung von Phenol-Formaldehyd-Schaumstoffkörpern, dadurch gekennzeichnet, daß die Kondensation des Phenol-Formaldehyds und die Expansion des resultierenden Harzes in einer einzelnen Stufe durchgeführt werden, indem das Phenol mit dem Formaldehyd in wässriger Lösung gemischt wird und zu dieser Mischung mindestens ein saurer Katalysator, mindestens ein schäumendes Agens und ein inertes Pulver hinzugefügt werden, von dem mindestens 70 Gew.-% eine Teilchengröße von weniger als 500 µm (Mikrometer) haben.

2. Verfahren nach Anspruch 1, dadurch gekennzeichnet, daß mindestens 70 Gew.-% des inerten Pulvers eine Teilchengröße von weniger als 125 µm (Mikrometer) haben.

3. Verfahren nach Anspruch 2, dadurch gekennzeichnet, daß das inerte Pulver in Mengen verwendet wird, die von 2% bis 400% bezogen auf das Phenolgewicht variieren.

## Revendications

1. Procédé pour préparer des corps en mousse rigide à base de phénol et de formaldéhyde, caractérisé en ce que la condensation du phénol et du formaldéhyde et l'expansion de la résine résultante sont effectuées en une seule opération en mélangeant le phénol avec le formaldéhyde en solution aqueuse et en ajoutant à ce mélange au moins un catalyseur acide, au moins un agent moussant, et une poudre inerte ayant, pour au moins 70% en poids, une dimension de particules inférieure à 500 µm.

2. Procédé selon la revendication 1, caractérisé en ce que cette poudre inerte a, pour au moins 70% en poids, une dimension de particules inférieure à 125 µm.

3. Procédé selon la revendication 2, caractérisé en ce que cette poudre inerte est utilisée en quantitiés variant de 2% à 400% en poids de phénol.